# FASCICULE DE BREVET EUROPEEN

(11) **EP 0 594 913 B1**
(45) Date de publication et mention de la délivrance du brevet: **22.01.1997**
(21) Numéro de dépôt: 92402952.3
(22) Date de dépôt: 30.10.1992
(51) Int. Cl.: G02B 6/44

(54) **Coffret de raccordement pour fibres optiques**
Rangierverteiler für optische Fasern
Optical fibre distribution centre

(30) Priorité: 26.10.1992 FR 9213067
(43) Date de publication de la demande: 04.05.1994
(73) Titulaire: ETABLISSEMENTS MOREL - ATELIERS ELECTROMECANIQUES DE FAVIERES, F-28170 Chateauneuf-en-Thymerais (FR)
(72) Inventeur: Morel, Jacques, F-28170 Chateauneuf-en-Thymerais (FR); Morel, Didier, F-28170 Chateauneuf-en-Thymerais (FR)
(74) Mandataire: Keib, Gérard

(56) Documents cités:
- EP-A- 0 288 808
- WO-A-82/02254
- DE-U- 8 411 159
- FR-A- 2 515 466
- FR-A- 2 559 277
- FR-A- 2 559 916

## Description

La présente invention concerne un coffret de raccordement pour fibres optiques.

On connait déjà des coffrets de raccordement pour fibres optiques, de forme parallélépipèdique composés de plusieurs modules fixés de façon amovible les uns contre les autres, chaque module comportant au moins une entrée et une sortie pour une fibre optique. Un exemple d'un tel coffret est décrit dans le document DE-U-84 11 159.3.

De tels coffrets sont destinés à être placés dans des immeubles collectifs d'habitation et servent à raccorder des fibres optiques et à les répartir entre différents locaux. On sait que les fibres optiques sont fragiles et difficiles à manipuler. Les coffrets connus ne facilitent pas particulièrement la manipulation de ces fibres.

Le but de la présente invention est de perfectionner de tels coffrets en les rendant plus pratiques à utiliser, notamment en facilitant la manipulation des fibres optiques, leurs raccordements et leurs positionnements à l'intérieur des coffrets.

Le coffret selon l'invention est caractérisé en ce que chaque module renferme au moins un boîtier comportant des organes de fixation, raccordement et/ou positionnement de la fibre optique, en ce que chaque boîtier comporte un élément plat allongé dont la hauteur correspond à celle du coffret et qui est fixé de façon articulée à la base du module, cet élément plat étant relié par ses deux bords longitudinaux à deux flancs articulés auxdits bords longitudinaux de façon à pouvoir pivoter entre une position dans laquelle ces deux flancs sont rapprochés l'un de l'autre et sensiblement perpendiculaires à l'élément plat et une position dans laquelle ces deux flancs s'étendent sensiblement dans le plan dudit élément plat, cet élément étant lui-même monté pivotant à la base du module entre une position dans laquelle il ferme un logement du module et une position dans laquelle il est rabattu vers l'extérieur du module.

Lorsque l'élément plat est en position rabattue à l'extérieur du coffret, avec ses deux flancs latéraux ouverts dans le prolongement de l'élément plat, l'utilisateur peut aisément manipuler les fibres optiques, les raccorder entre elles et les positionner. Une fois l'intervention terminée, les flancs latéraux sont repliés l'un vers l'autre. Dans cette position, l'ensemble constitué par l'élément allongé plat et ses deux flancs repliés est basculé vers le logement prévu dans le module, de sorte que l'élément allongé plat constitue une porte qui ferme le logement ci-dessus.

Les fibres optiques sont ainsi parfaitement protégées à l'intérieur du coffret.

L'ensemble des dispositions précitées facilite considérablement les manipulations et les interventions sur les fibres optiques, tout en garantissant parfaitement leur protection, lorsque les modules sont fermés.

Selon une version avantageuse de l'invention, les modules sont fixés latéralement les uns aux autres par des moyens d'encliquetage.

Ces moyens d'encliquetage constituent un moyen très commode pour fixer les modules les uns aux autres ou pour les détacher les uns des autres, sans outillage.

Selon une version préférée de l'invention, chaque boîtier comporte sur chacun de ses flancs une plaquette comportant des organes de fixation, raccordement et/ou positionnement de la fibre optique.

Ces plaquettes sont de préférence fixées de façon amovible sur le flanc correspondant, par exemple par des organes d'encliquetage.

Les plaquettes amovibles facilitent les manipulations, les positionnements et les raccordements des fibres optiques.

D'autres particularités et avantages de l'invention apparaîtront encore dans la description ci-après.

Aux dessins annexés donnés à titre d'exemples non limitatifs:
- la figure 1 est une vue en perspective d'un coffret conforme à l'invention;
- la figure 2 est une vue en plan d'un élément plat avec ses deux flancs ouverts à plat, montrant une première organisation possible des fibres optiques;
- la figure 3 est une vue en plan analogue à la figure 2, montrant une autre organisation possible des fibres optiques.

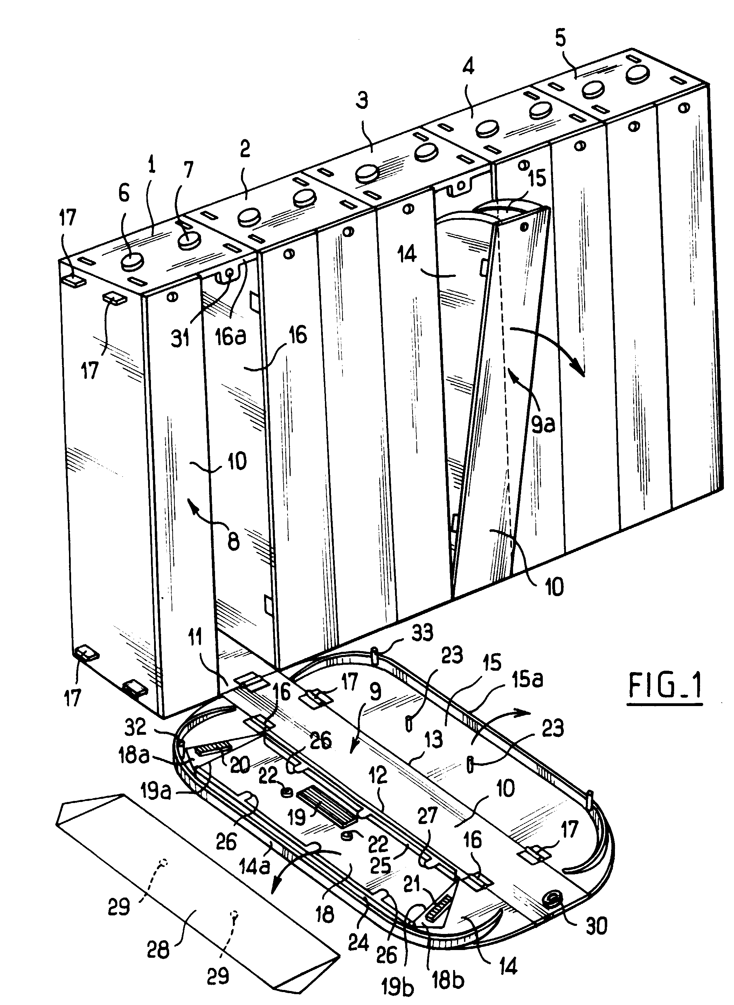

Dans la réalisation de la figure 1, le coffret de raccordement pour fibres optiques, présente une forme parallélépipédique et est composé de plusieurs modules 1, 2, 3, 4, 5, fixés de façon amovible les uns contre les autres. Chaque module comporte des entrées et des sorties telles que 6, 7 pour une fibre optique.

Conformément à l'invention, chaque module renferme deux boîtiers tels que 8, 9, comportant chacun des organes de fixation, raccordement et/ou positionnement de la fibre optique qui seront détaillés plus loin.

Chaque boîtier 8, 9 comporte un élément plat allongé 10 dont la hauteur correspond à celle du coffret et qui est fixé de façon articulée à la base du module. Cet élément plat 10 est relié par ses deux bords longitudinaux 12, 13 à deux flancs articulés en 16, 17 auxdits bords longitudinaux de façon à pouvoir pivoter entre une position (voir sur la figure 1, le boîtier 9a qui est partiellement sorti du coffret) dans laquelle ces deux flancs 14, 15 sont rapprochés l'un de l'autre et sensiblement perpendiculaires à l'élément plat 10 et une position (voir sur la figure 1, le boîtier 9 qui est complètement sorti du coffret) dans laquelle ces deux flancs 14, 15 s'étendent sensiblement dans le plan de l'élément plat 10. L'élément 10 est lui-même monté pivotant à la base 11 du module grâce à une charnière 11a entre une position dans laquelle, il ferme un logement 16 du module et une position dans laquelle il est rabattu vers l'extérieur du module.

Les modules 1, 2,...5 sont fixés latéralement les uns aux autres par des moyens d'encliquetage, tels que désignés par les parties en saillie 17 qui coopèrent avec des ouvertures complémentaires.

Chaque module 1, 2,...5 comporte deux boîtiers tels que 8, 9 juxtaposés et identiques.

Chaque boîtier 8, 9 comporte sur chacun de ses flancs 14, 15 une plaquette 18 (voir le boîtier 9 ouvert) comportant des organes 19, 20, 21 de fixation, raccordement et/ou positionnement de la fibre optique.

De plus, chaque plaquette 18 est fixée de façon amovible sur le flanc 14 ou 15 correspondant des organes d'encliquetage complémentaires 22, 23.

Par ailleurs, chaque plaquette 18 comprend deux rebords longitudinaux 24, 25, parallèles à l'élément plat allongé 10. Chaque rebord 24, 25 comporte sur son sommet espacé de la plaquette 18 des languettes 26 parallèles à cette plaquette 18 et s'étendant vers le milieu de celle-ci.

D'autre part, la face de chaque plaquette 18 qui comporte les organes 19, 20, 21 de fixation, raccordement et/ou positionnement de la fibre optique peut être recouverte par un couvercle plat 28 pouvant être fixé de façon amovible à ladite plaquette, par des organes d'encliquetage 29.

Chaque boîtier 8, 9 comprend à l'extrémité de l'élément 10 plat allongé, opposé à l'articulation, un organe de fixation 30 coopérant avec un organe complémentaire 31 prévu à la partie supérieure du logement 16 correspondant du module.

La plaquette 18 représentée sur la figure 1, comporte deux extrémités 18a, 18b, opposées reliées au reste de la plaquette par une ligne de rupture 19a, 19b. Ces deux extrémités 18a, 18b cassables selon la ligne 19a, 19b comportent des organes 20, 21 de positionnement de la fibre optique.

Par ailleurs, les deux flancs 14, 15 comportent sur leurs bords longitudinaux 14a, 15a opposés aux articulations 16, 17, des organes complémentaires 32, 33 de fixation par encliquetage permettant de fixer de façon amovible les deux flancs 14, 15 dans une position rapprochée l'un de l'autre, qui permet la mise en place de l'ensemble dans un logement 16 du coffret.

Le coffret que l'on vient de décrire peut être réalisé entièrement par moulage en matière plastique.

Les organes 19, 20, 21 de positionnement ou de raccordement des fibres optiques peuvent être constitués par des plaquettes en matière plastique fixées par encliquetage dans des ouvertures ménagées sur les plaques 14.

Les organes 19, 20, 21 en forme de plaquettes peuvent comporter des rainures destinées à loger et à pincer légèrement les fibres optiques.

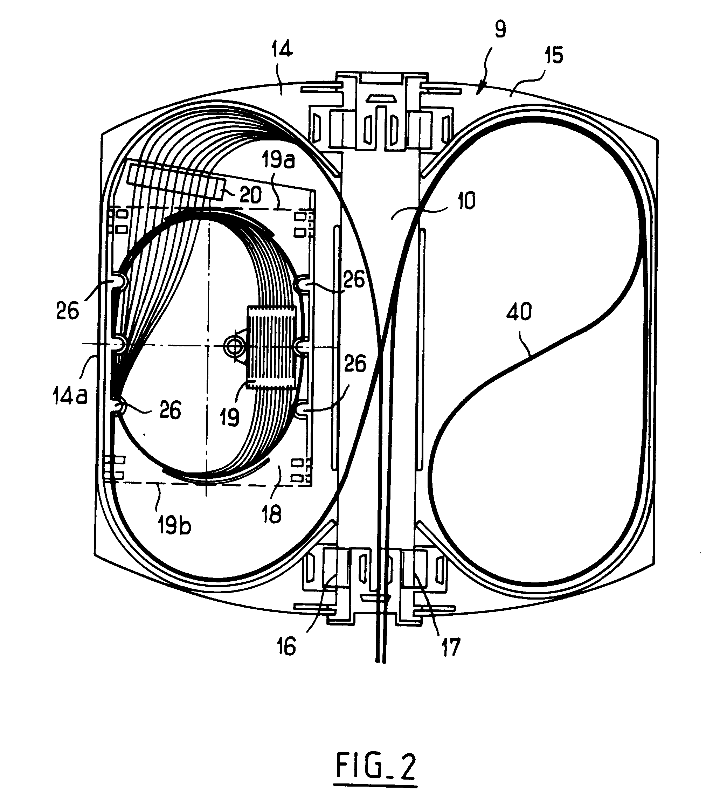

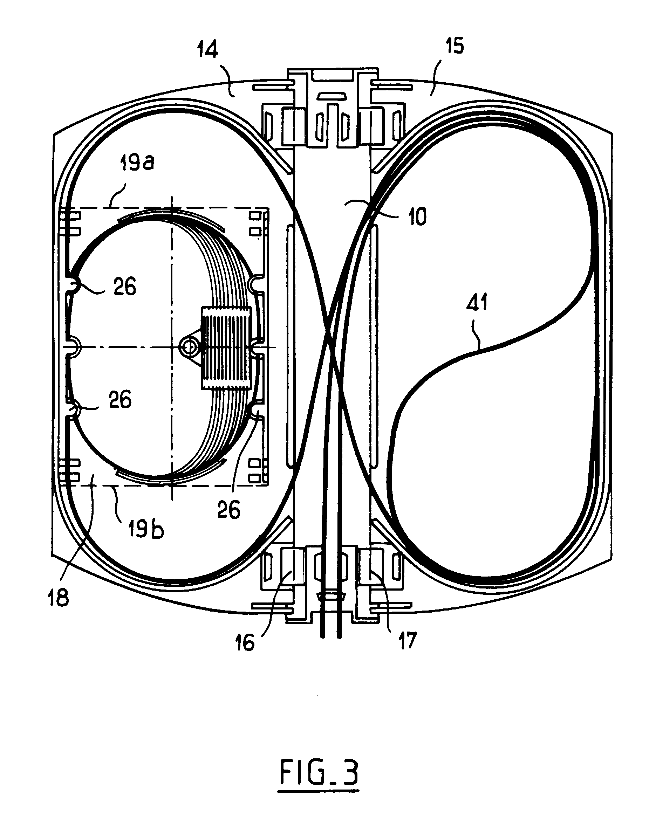

Les figures 2 et 3 montrent à titre d'exemple non limitatif, le positionnement de fibres optiques 40, 41 sur un boîtier 9 dont les deux flancs 14, 15 sont disposés à plat. On voit sur ces deux figures 2 et 3 que les fibres optiques 40, 41 s'étendent sur la surface plane constituée par l'élément plat 10 et les deux flancs 14, 15 en formant des boucles présentant des courbures à rayon assez important évitant la rupture de la fibre.

Ces figures 2, 3 permettent de comprendre les fonctions des organes 19, 20, 21 de positionnement et de raccordement des fibres, ainsi que celui des pattes 26 ménagées sur les bords longitudinaux de la plaquette 14.

Dans le cas de la figure 2, l'extrémité 18b de la plaquette 14 a été enlevée par rupture le long de la ligne 19b car la configuration de la fibre optique 40 ne nécessite pas dans ce cas, l'utilisation de l'organe de fixation 21.

Dans le cas de la figure 3, les deux extrémités 18a et 18b de la plaquette ont été enlevées.

Les figures 2 et 3 montrent qu'il est très aisé de mettre en place des fibres optiques dans les boîtiers dans leur position ouverte telle que représentée. Cette disposition facilite également des positionnements et les raccordements des fibres optiques.

Après chaque intervention, il suffit de placer sur la plaquette 14, le couvercle plat 28 représenté sur la figure 1 qui protège et maintient en place définitivement la fibre optique.

Il suffit ensuite de rabattre les deux flancs 14, 15 l'un vers l'autre, puis de faire pivoter l'ensemble du boîtier autour de l'articulation ménagée à la base 11 du module correspondant, pour l'engager dans le logement 16 et fermer celui-ci.

## Revendications

1. Coffret de raccordement pour fibres optiques, de forme parallélépipèdique composé de plusieurs modules (1, 2,...5) fixés de façon amovible les uns contre les autres, chaque module comportant au moins une entrée et une sortie (6, 7) pour une fibre optique, caractérisé en ce que chaque module (1, 2,...5) renferme au moins un boîtier (8, 9) comportant des organes de fixation, raccordement et/ou positionnement de la fibre optique, en ce que chaque boîtier (8, 9) comporte un élément plat allongé (10) dont la longueur correspond à la hauteur du module et qui est fixé de façon articulée à la base du (11) module, cet élément plat (10) étant relié par ses deux bords longitudinaux (12, 13) à deux flancs (14, 15) articulés auxdits bords longitudinaux de façon à pouvoir pivoter entre une position dans laquelle ces deux flancs (14, 15) sont rapprochés l'un de l'autre et sensiblement perpendiculaires à l'élément plat (10) et une position dans laquelle ces deux flancs (14, 15) s'étendent sensiblement dans le plan dudit élément plat (10), cet élément (10) étant lui-même monté pivotant à la base (11) du module entre une position dans laquelle il ferme un logement (16) du module et une position dans laquelle il est rabattu vers l'extérieur du module.

2. Coffret conforme à la revendication 1, caractérisé en ce que les modules (1, 2,...5) sont fixés latéralement les uns aux autres par des moyens d'encliquetage (17).

3. Coffret conforme à l'une des revendications 1 ou 2, caractérisé en ce que chaque module (1, 2,...5) comporte deux boîtiers (8, 9) juxtaposés et identiques.

4. Coffret conforme à l'une des revendications 1 à 3, caractérisé en ce que chaque boîtier (9) comporte sur chacun de ses flancs (14, 15) une plaquette (18) comportant des organes (19, 20, 21) de fixation, raccordement et/ou positionnement de la fibre optique.

5. Coffret conforme à la revendication 4, caractérisé en ce que chaque plaquette (18) est fixée de façon amovible sur le flanc (14, 15) correspondant.

6. Coffret conforme à la revendication 5, caractérisé en ce que la plaquette (18) est fixée sur ledit flanc (14) par des organes d'encliquetage (22).

7. Coffret conforme à l'une des revendications 5 ou 6, caractérisé en ce que chaque plaquette (18) comprend deux rebords longitudinaux (24, 25), parallèles à l'élément plat allongé (10), chaque rebord (24, 25) comportant sur son sommet espacé de la plaquette (18) des languettes (26) parallèles à la plaquette et s'étendant vers le milieu de celle-ci.

8. Coffret conforme à l'une des revendications 5 à 7, caractérisé en ce que la face de chaque plaquette (18) qui comporte les organes (19, 20, 21) de fixation, raccordement et/ou positionnement de la fibre optique est recouverte par un couvercle plat (28) fixé de façon amovible à ladite plaquette (18).

9. Coffret conforme à l'une des revendications 1 à 8, caractérisé en ce que chaque boîtier (8, 9) comprend à l'extrémité de l'élément plat allongé opposé à l'articulation (11a) un organe de fixation (30) coopérant avec un organe complémentaire (31) prévu à la partie supérieure du logement (16) correspondant du module.

10. Coffret conforme à l'une des revendications 4 à 9, caractérisé en ce que chaque plaquette (18) comporte deux extrémités opposées (18a, 18b) reliées au reste de la plaquette (18) par une ligne de rupture (19a, 19b), ces deux extrémités (18a, 18b) comportant des organes (20, 21) de positionnement de la fibre optique (40).

11. Coffret conforme à l'une des revendications 1 à 12, caractérisé en ce que les deux flancs (14, 15) comportent sur leurs bords longitudinaux (14a, 15a) opposés aux articulations (16, 17), des organes (32, 33) permettant de fixer de façon amovible les deux flancs (14, 15) dans une position rapprochée l'une de l'autre.

12. Coffret conforme à la revendication 11, caractérisé en ce que lesdits organes de fixation (32, 33) sont des organes coopérant l'un avec l'autre par encliquetage.

13. Coffret conforme à l'une des revendications 1 à 12, caractérisé en ce qu'il est entièrement réalisé par moulage en matière plastique.

## Patentansprüche

1. Anschlußkasten für Lichtleitfasern, der die Form eines Parallelepipeds aufweist und aus mehreren Modulen (1, 2, ...5) zusammengesetzt ist, die in abnehmbarer Weise aneinander befestigt sind, wobei jeder Modul wenigstens einen Eingang und einen Ausgang (6, 7) für eine Lichtleitfaser aufweist, dadurch gekennzeichnet, daß jeder Modul (1, 2, ... 5) wenigstens ein Gehäuse (8, 9) umschließt, welches Organe zum Befestigen, zum Anschließen und/oder zum Positionieren der Lichtleitfaser aufweist, daß jedes Gehäuse (8, 9) ein längliches flaches Element (10) enthält, dessen Länge der Höhe des Moduls entspricht und welches gelenkig an dem unteren Abschnitt (11) des Moduls befestigt ist, wobei dieses flache Element (10) über seine beiden Längsränder (12, 13) mit zwei Seitenteilen (14, 15) verbunden ist, die so an den Längsrändern angelenkt sind, daß sie zwischen einer Stellung, in der die beiden Seitenteile (14, 15) einander angenähert und im wesentlichen senkrecht zu dem flachen Element (10) sind, und einer Stellung schwenkbar sind, in der sich die beiden Seitenteile (14, 15) im wesentlichen in der Ebene des flachen Elements (10) erstrecken, wobei dieses Element (10) wiederum an dem unteren Abschnitt (11) des Moduls so befestigt ist, daß es zwischen einer eine Aufnahme (16) des Moduls verschließenden Stellung und einer vom Modul nach außen herausgeklappten Stellung schwenkbar ist.

2. Kasten nach Anspruch 1, dadurch gekennzeichnet, daß die Module (1, 2, ... 5) durch Einrastmittel (17) seitlich aneinander befestigt sind.

3. Kasten nach einem der Ansprüche 1 oder 2, dadurch gekennzeichnet, daß jeder Modul (1, 2, ... 5) zwei nebeneinanderliegende und identische Gehäuse (8, 9) enthält.

4. Kasten nach einem der Ansprüche 1 bis 3, dadurch gekennzeichnet, daß jedes Gehäuse (9) an jedem seiner Seitenteile (14, 15) eine Platte (18) enthält, welche Organe (19, 20, 21) zum Befestigen, zum Anschließen und/oder zum Positionieren der Lichtleitfaser aufweist.

5. Kasten nach Anspruch 4, dadurch gekennzeichnet, daß jede Platte (18) in abnehmbarer Weise an dem entsprechenden Seitenteil (14, 15) befestigt ist.

6. Kasten nach Anspruch 5, dadurch gekennzeichnet, daß die Platte (18) an dem Seitenteil (14) durch Einrastmittel (22) befestigt ist.

7. Kasten nach einem der Ansprüche 5 oder 6, dadurch gekennzeichnet, daß jede Platte (18) zwei sich in Längsrichtung erstreckende, umgebogene Ränder (24, 25) enthält, die parallel zu dem länglichen flachen Element (10) sind, wobei jeder umgebogene Rand (24, 25) auf seiner von der Platte (18) beabstandeten Oberseite Zungen (26) aufweist, die parallel zur Platte sind und sich zu ihrer Mitte hin erstrecken.

8. Kasten nach einem der Ansprüche 5 bis 7, dadurch gekennzeichnet, daß die die Organe (19, 20, 21) zum Befestigen, zum Anschließen und/oder zum Positionieren der Lichtleitfaser aufweisende Seite jeder Platte (18) von einer flachen Abdeckung (28) bedeckt ist, die in abnehmbarer Weise an der Platte (18) befestigt ist.

9. Kasten nach einem der Ansprüche 1 bis 8, dadurch gekennzeichnet, daß jedes Gehäuse (8, 9) an dem der Anlenkung (11a) des länglichen flachen Elements entgegengesetzten Ende ein Befestigungsorgan (30) aufweist, das mit einem am oberen Abschnitt der entsprechenden Aufnahme (16) des Moduls vorgesehenen komplementären Organ (31) zusammenwirkt.

10. Kasten nach einem der Ansprüche 4 bis 9, dadurch gekennzeichnet, daß jede Platte (18) zwei zueinander entgegengesetzte Enden (18a, 18b) aufweist, die mit dem Rest der Platte (18) über eine Bruchlinie (19a, 19b) verbunden sind, wobei diese beiden Enden (18a, 18b) Organe (20, 21) zum Positionieren der Lichtleitfaser (40) aufweisen.

11. Kasten nach einem der Ansprüche 1 bis 12, dadurch gekennzeichnet, daß die beiden Seitenteile (14, 15) auf ihren den Anlenkungen (16, 17) entgegengesetzten Längsrändern (14a, 15a) Organe (32, 33) aufweisen, die das lösbare Befestigen der beiden Seitenteile (14, 15) aneinander in einer einander angenäherten Stellung ermöglicht.

12. Kasten nach Anspruch 11, dadurch gekennzeichnet, daß die Befestigungsorgane (32, 33) Organe sind, die miteinander durch Einrasten zusammenwirken.

13. Kasten nach einem der Ansprüche 1 bis 12, dadurch gekennzeichnet, daß er vollständig aus einem Kunststoff geformt ist.

## Claims

1. Distribution centre for optical fibres, parallelepiped in shape, comprised of a plurality of modules (1, 2,...5) which are fixed in a removable manner one against the other, each module comprising at least one input and one output (6, 7) for an optical fibre, characterised in that each module (1, 2,...5) includes at least one casing (8, 9) comprising members for fixing, connecting and/or positioning the optical fibre, in that each casing (8, 9) comprises a flat elongate element (10) of which the length corresponds to the height of the module and which is fixed in an articulated manner to the base of the module (11), this flat element (10) being connected by its two longitudinal edges (12, 13) to two side pieces (14, 15) articulated at the said longitudinal edges in such a way as to be able to pivot between a position in which these two side pieces (14, 15) are moved towards each other and substantially perpendicular to the flat element (10) and a position in which these two side pieces (14, 15) extend substantially in the plane of the said flat element (10), this element (10) being itself mounted in such a way as to pivot at the base (11) of the module between a position in which it closes a housing (16) of the module and a position in which it is folded back towards the outside of the module.

2. Centre according to claim 1, characterised in that the modules (1, 2,...5) are fixed laterally to each other by snap means (17).

3. Centre according to one of claims 1 or 2, characterised in that each module (1, 2,...5) comprises two juxtaposed and identical casings (8, 9).

4. Centre according to one of claims 1 to 3, characterised in that each casing (9) comprises on each of its side pieces (14, 15) a plate (18) comprising members (19, 20, 21) for fixing, connecting and/or positioning the optical fibre.

5. Centre according to claim 4, characterised in that each plate (18) is fixed in a removable manner to the corresponding side piece (14, 15).

6. Centre according to claim 5, characterised in that the plate (18) is fixed to the said side piece (14) by snap means (22).

7. Centre according to one of claims 5 or 6, characterised in that each plate (18) comprises two longitudinal edges (24, 25) parallel to the flat elongate element (10), each edge (24, 25) comprising at its peak remote from the plate (18), tongues (26) parallel to the plate and extending towards the middle thereof.

8. Centre according to one of claims 5 to 7, characterised in that the face of each plate (18) which comprises the members (19, 20, 21) for fixing, connecting and/or positioning the optical fibre is covered by a flat cover (28) fixed in a removable manner to the said plate (18).

9. Centre according to one of claims 1 to 8, characterised in that each casing (8, 9) comprises, at the end of the flat elongate element opposite to the articulation point (11a), a fixing member (30) cooperating with a complementary member (31) provided on the upper part of the corresponding housing (16) of the module.

10. Centre according to one of claims 4 to 9, characterised in that each plate (18) comprises two opposite ends (18a, 18b) connected to the rest of the plate (18) by a rupture line (19a, 19b), these two ends (18a, 18b) comprising members (20, 21) for positioning the optical fibre (40).

11. Centre according to one of claims 1 to 12[sic], characterised in that the two side pieces (14, 15) comprise, on their longitudinal edges (14a, 15a) opposite to the articulation points (16, 17), members (32, 33) permitting the two side pieces (14, 15) to be displaceably fixed in a position close to each other.

12. Centre according to claim 11, characterised in that the said fixing members (32, 33) are members cooperating with each other by snap fastening.

13. Centre according to one of claims 1 to 12, characterised in that it is produced entirely by moulding in a synthetic material.
